# EUROPEAN PATENT SPECIFICATION

(11) **EP 2 692 232 B1**
(45) Date of publication and mention of the grant of the patent: **28.10.2015**
(21) Application number: 12763915.1
(22) Date of filing: 13.03.2012
(51) Int. Cl.: A01N 63/02, A01N 65/42, A01N 35/04, A01P 3/00, A01N 43/16

(54) **USE OF NATURAL ANTIFUNGAL AGENTS IN ORDER TO PREVENT THE INFECTION OF PRUNING WOUNDS, GRAFTS AND LESIONS IN WOODY PLANTS BY PHYTOPATHOGENIC FUNGI**
VERWENDUNG NATÜRLICHER ANTIFUNGALER MITTEL ZUR VERHINDERUNG DER INFEKTION VON SCHNITTWUNDEN, IMPLANTATEN UND LÄSIONEN IN HOLZPFLANZEN DURCH PHYTOPATHOGENE PILZE
UTILISATION D'ANTIFONGIQUES NATURELS POUR PRÉVENIR L'INFECTION DE LÉSIONS, DE GREFFES ET DES PLAIES D'ÉLAGAGE DANS DES PLANTES LIGNEUSES PAR DES CHAMPIGNONS PHYTOPATHOGÈNES

(30) Priority: 28.03.2011 ES 201130461
(43) Date of publication of application: 05.02.2014
(73) Proprietor: Bodegas Vega Sicilia, S.A., Valladolid (ES)
(72) Inventor: MATEO BERNAL, Rosa Maria, 47359 Valbuena de Duero Valladolid (ES); COBOS ROMÁN, Rebeca, 47359 Valbuena de Duero Valladolid (ES); GARCÍA ANGULO, Penélope, 47359 Valbuena de Duero Valladolid (ES); ALONSO MONROY, Alberto, 47359 Valbuena de Duero Valladolid (ES); ÁLVAREZ RODRíGUEZ, Maria Luisa, 47359 Valbuena de Duero Valladolid (ES); SEVILLANO NISTAL, Silvia, 47359 Valbuena de Duero Valladolid (ES); ÁLAVARE PÉREZ, José Manuel, 47359 Valbuena de Duero Valladolid (ES); ACEBES ARRANZ, José Luis, 47359 Valbuena de Duero Valladolid (ES); GARZÓN JIMENO, Enrrique, 47359 Valbuena de Duero Valladolid (ES); RUBIO COQUE, Juan José, 47359 Valbuena de Duero Valladolid (ES)
(74) Representative: Urizar Barandiaran, Miguel Angel
(86) International application number: PCT/ES2012/000057
(87) International publication number: WO 2012/131117

(56) References cited:
- WO-A1-2006/102766
- WO-A1-2006/102766
- ES-A1- 2 328 322
- US-A- 5 549 739
- RATTANAPITIGORN ET AL: "Vanillin enhances the antifungal effect of plant essential oils against Botrytis cinerea", INTERNATIONAL JOURNAL OF AROMATHERAPY, AROMATHERAPY PUBLICATIONS, HOVE, GB, vol. 16, no. 3-4, 28 November 2006 (2006-11-28), pages 193-198, XP005743602, ISSN: 0962-4562, DOI: 10.1016/J.IJAT.2006.09.003
- TORR ET AL: "Advances in understanding bioactivity of chitosan and chitosan oligomers against selected wood-inhabiting fungi", HOLZFORSCHUNG : INTERNATIONAL JOURNAL OF THE BIOLOGY, CHEMISTRY, PHYSICS AND TECHNOLOGY OF WOOD, WALTER DE GRUYTER GMBH & CO., BERLIN, DE, vol. 59, no. 5, 1 September 2005 (2005-09-01), pages 559-567, XP008171169, ISSN: 0018-3830, DOI: 10.1515/HF.2005.092 [retrieved on 2005-08-08]
- Teresa Nascimento ET AL: "Potential Use of Chitosan in the Control of Grapevine Trunk Diseases", Phytopathologia Mediterranea, 1 January 2007 (2007-01-01), pages 218-224, XP55125822, DOI: 10.1400/78284 Retrieved from the Internet: URL:http://digital.casalini.it/10.1400/782 84 [retrieved on 2014-08-29]
- KROL ET AL: "Influence of chitosan on growth and development of Phomopsis viticola Sacc. [Chitosan activity in an inhibition of in vitro growth of Phomopsis viticola and protection of grapevine canes against the pathogen.]", PHYTOPATHOLOGIA POLONICA, POLISH PHYTOPATHOLOGICAL SOCIETY, PL, vol. 39, 1 January 2006 (2006-01-01), pages 155-162, XP008171174, ISSN: 1230-0462
- Adrian Loschiavo: "Sustaining grapevines infected with eutypa dieback", , 1 January 2010 (2010-01-01), pages 1-57, XP55031801, Retrieved from the Internet: URL:http://www.sardi.sa.gov.au/__data/asse ts/pdf_file/0004/133897/GWRDC_Final_Report _SAR_06_01.pdf [retrieved on 2012-07-04]
- SANDRA ALANIZ ET AL: "Evaluation of fungicides to controland, and their effect during the rooting phase in the grapevine propagation process", CROP PROTECTION, ELSEVIER SCIENCE, GB, vol. 30, no. 4, 19 December 2010 (2010-12-19), pages 489-494, XP028147388, ISSN: 0261-2194, DOI: 10.1016/J.CROPRO.2010.12.020 [retrieved on 2010-12-24]
- Diane E Brown-Rytlewski ET AL: "Plant Virulence of Botryosphaeria dothidea and Botryosphaeria obtusa on Apple and Management of Stem Cankers with Fungicides", Plant Disease, 1 September 2000 (2000-09-01), pages 1031-1037, XP55137280, Retrieved from the Internet: URL:http://apsjournals.apsnet.org/doi/pdf/ 10.1094/PDIS.2000.84.9.1031 [retrieved on 2014-08-29]
- Alberto Bianchi ET AL: "Ultrastructural Studies of the Effects of Allium sativum on Phytopathogenic Fungi in vitro", Plant Disease, 1 November 1997 (1997-11-01), pages 1241-1246, XP055137308, Retrieved from the Internet: URL:http://apsjournals.apsnet.org/doi/pdf/ 10.1094/PDIS.1997.81.11.1241 [retrieved on 2014-08-29]
- C. BERTSCH ET AL: "Grapevine trunk diseases: complex and still poorly understood", PLANT PATHOLOGY, vol. 62, no. 2, 21 August 2012 (2012-08-21), pages 243-265, XP055137408, ISSN: 0032-0862, DOI: 10.1111/j.1365-3059.2012.02674.x
- NASCIMENTO, T. ET AL.: 'Potential use of chitosan in the control of grapevine trunk diseases.' PHYTOPATHOLOGIA MEDITERRANEA, [Online] vol. 46, no. 2, 2007, pages 218 - 224, XP055125822 ISSN: 0031-9465 Retrieved from the Internet: <URL:http://91.121.146.53/index.php/pm/arti cle/view/2156/2077>
- TORR, K. M. ET AL.: 'Advances in understanding bioactivity of chitosan and chitosan oligomers against selected wood-inhabiting fungi.' HOLZFORSCHUNG vol. 59, no. 5, 2005, pages 559 - 567, XP008171169
- KROL, E.: 'Chitosan activity in an inhibition of in vitro growth of Phomopsis viticola and protection of grapevine canes against the pathogen.' PHYTOPATHOLOGIA POLONICA, [Online] vol. 39, 2006, pages L55 - 162, XP008171174 ISSN: 1230 0462 Retrieved from the Internet: <URL:http://antywirus.au.poznan.pl/ptfit/pd f/PP39a/PP 39_155-162.pdf>
- SARDI: 'Sustaining grapevines infected with Eutypa dieback' FINAL REPORT TO GRAPE AND WINE RESEARCH & DEVELOPMENT CORPORATION 2010, pages 1 - 60, XP055031801
- RATTANAPITIGORN, P. ET AL.: 'Vanillin enhances the antifungal effect of plant essential oils against Botrytis cinerea.' THE INTERNATIONAL JOURNAL OF AROMATHERAPY vol. 16, no. 3-4, 2006, pages 193 - 198, XP005743602

## Description

The purpose of the invention refers to the use of natural antifungal agents, applied in combination to prevent the infections by phytopathogenic fungi of pruning wounds, lesions and grafts in grapevine plants.

### Technical field of the invention

This invention refers to the use in combination, of three natural compounds/extracts that separately have antifungal properties and that by combining them show very high effectiveness in avoiding infection through pruning wounds, lesions and grafts of grapevines by phytopathogenic fungi responsible for grapevine trunk diseases, avoiding the death of the plant due to this type of pathogens.

The different compounds/extracts and their mixture has shown in trials conducted on culture medium plates a high capacity for inhibiting the growth of the following phytopathogenic fungi involved in the development of grapevine trunk diseases: *Botryosphaeria dothidea, Cylindrocarpon macrodidymum* (*Neonectria macrodidyma), Diplodia seriata, Eutypa lata, Phaeomoniella chlamydospora, Phaeoacremonium aleophylum* and *Phomopsis viticola.*

In trials conducted in the laboratory with grapevine shoots of 7-10 cm in length the different compounds/extracts and their mixture have shown with a high capacity for inhibiting the development and colonisation of the aforementioned fungi in the interior of the shoots, avoiding their movement through their interior.

In conducted field trials the different compounds/extracts and their mixtures have shown not to have negative effects on the development of the plant, in addition to inhibiting the infection of the plant by the aforementioned fungi through pruning wounds. The plants subjected to treatment and artificially infected showed, after two years of trials, a mortality rate of 0-12%, compared to untreated grapevines that were infected artificially which showed a mortality rate of 52%. These data confirm the treatment's effectiveness in the field in avoiding the infection of phytopathogenic fungi through pruning wounds.

A mix of these compounds/extracts is especially recommended as an antifungal agent to avoid the infection of grapevines through pruning wounds, grafts or other type of lesions.

### Background of the invention

In the present state of technology, the petitioner does not know of precedents of inventions referring to the use of some natural antifungal agents, applied in combination, to prevent the infection of pruning wounds, grafts and lesions in grapevine plants by phytopathogenic fungi.

The term grapevine trunk diseases or grapevine decline encompasses a set of pathologies produced as a consequence of the infection of the plant by a series of phytopathogenic fungi. The infection of the plants is an unsolved problem that generally begins through the root or more frequently through pruning wounds or other type of lesions produced during the tillage of the vineyard or through attack by insects.

Traditionally, these unsolved problems have been differentiated into several pathologies. Depending on the symptoms and the most frequently isolated fungi in the case of the diseased plants, the most important diseases or pathologies are those indicated below:
- Petri disease. It mainly affects young plants. It causes serious economic losses in new plantings, sometimes provoking the death of up to 90% of the plants. The causal agents would be *Phaeocremonium aleophylum* and *Phaeomoniella chlamydospora* [Bertelly et al., (1998), Phytopathol. Mediterr. 37: 79-82]. The plants present weak growth and a reduction in the root mass that produces premature exhaustion. In the case of this disease, a clear relation has been established between the appearance of symptoms in the vineyard and the presence of infected plants in the nursery [Giménez-Jaime et al., (2006), J. Phytopathol. 154: 598-602].
- Esca (apoplectic stroke). This is one of the oldest grapevine diseases known, considered as endemic of all the vine-growing areas worldwide. It principally affects vines that are more than 25 years old and the main fungi associated with it are (as in the case of the Petri disease) *P*. *aleophylum* and *P*. *chlamydospora,* although with certain frequency the pathogens *Stereum hirsutum* and *Fomitiporia mediterranea* can be isolated [Surico et al., (2006), Phytopathol. Mediterr. 45: 68-86]. The plants present discolouration and very evident leaf necrosis. The production is reduced and the bunches of grapes become shrivelled like raisins. With some frequency the disease produces an apoplectic stroke or sudden death of the plant, especially in warm climates. [Cobos, (2008), Doctoral thesis. Department of Microbiology and Genetics. University of Salamanca].

- Eutypa dieback. This is a disease of worldwide distribution produced by the fungus *Eutypa lata.* The plants present weak shoots with internodal cuts and small, distorted and chlorotic leaves [Lecomte et al., (2000), Appl. Environ. Microbiol. 66: 4475-4480].
- Black foot. This disease of worldwide distribution preferentially affects young plants (2-10 years old). The name of the disease refers to the presence of the necrosed roots with darkening of the xylem vessels [Hallen et al., (2004), Stud. Mycol. 50: 431-455]. It deals with a pathology associated to different species of the genus *Cylindrocarpon* [Alaniz et al., (2007), Plant Disease 91: 1187-1193].
- Excoriosis. A pathology of worldwide distribution produced by *Phomopsis viticola,* it affects all the plant organs and the damages caused are varied [Dubos, (2002), Maladies cryptogamiques de la vigne. Ed. Feret. Bordeaux].
- Dead-arm syndrome. The most characteristic syndrome is the appearance of surface necrosis in branches and trunk that are observed by lifting the bark. In a cross-section the tissue shows sectoral discolouration of the black colour, with the pathogen development in the vascular bundles. The principal associated fungi are members of the Botryosphaeriaceae family such as *Diplodia seriata* and *Diplodia mutila.* [van Niekerk et al., (2006), Phytopathol. Mediterr. 45: (Supplement): 43-54].

The limit that exists between these diseases is very tenuous and, in fact, occasionally the plants may present symptoms that could be attributed to 2 or more diseases. In addition, from the affected plants it is very frequently possible to isolate a mixture of different phytopathogenic fungi. Therefore, the current trend is that of considering that all the diseases are the same pathology (trunk diseases or grapevine decline), with the symptoms being able to vary according to the pathogenic fungi involved in the infecting process and the environmental conditions, or differences attributable to the different varieties of grapevines [Cobos, (2008), Doctoral thesis. Department of Microbiology and Genetics. University of Salamanca].

The grapevine trunk diseases are a serious problem for the world's wine-producing industry. In Europe, the wine-producing industry is very important for the European Union. It represents 47% of the world's wine-producing surface area and 60% of the worldwide production of wine. The principal producers on the world level are France, Italy, Spain, among the three producing more than 50% of the worldwide production and cornering 53.8% of the world's wine exports.

The Spanish wine-producing sector is of great importance because of the economic value that it generates, for the extension that it occupies, as well as for the good image that it produces of Spain internationally. Spain dedicates 1.2 million hectares to the growing of grapes (of which 97.4% is used for producing wine, 2% for table grapes, 0.3% for the elaboration of raisins and the remaining 0.3% to nurseries). It is the country with the largest extension of vineyards in the world. In addition, the grapevines occupy third place in extension of Spanish crops, following cereals and olive trees.

The grapevine trunk diseases are probably at present the greatest threat worldwide faced by the wine producers and grapevine nurseries for various reasons:
I). The absence of effective control methods. In fact, at present the vine growers may only use preventive methods to limit or minimise the transmission of the responsible fungi among which we can cite cultural methods (such as eliminating as quickly as possible the diseased trunk, burning the pruning waste, disinfection of the pruning tools, etc.) and physical methods such as treating the planting shoots with heat (bathing in 50°C water for 15-30 minutes) before planting them in soil [Cobos, (2008), Doctoral thesis. Department of Microbiology and Genetics. University of Salamanca]. However, some studies have been made that propose the use of biological control agents to treat these diseases. Thus, Di Marco and Osti [(2007), Phytopathol. Mediterr. 46: 73-83] verified the effectiveness of a commercial preparation of the BCA *Trichoderma harzianum* to control the infection by P. *chlamydospora* in nurseries. The BCA showed certain effectiveness, promoting the development of the root system and increasing the percentage of plants that survive the infection with the pathogen. However, as an adverse effect, an increase was observed in the mortality of the plants treated with BCA, possibly due to the absence of BCA-vine adaptation. Other authors [Munkvold and Marois, (1993), Phytopathol. 83: 624-629] isolated from the pruning wounds of the grapevine a strain of the fungus *Fusarium lateritium* that behaves like BCA against the *Eutypa lata* (the main phytopathogen responsible for the Eutypa dieback) and from which mutants resistant to the benomyl antifungal agent were even isolated in order to increase the effectiveness of the treatment [McMahan et al., (2001), J, Ind. Microbiol. Biotechnol. 26: 151-155]. The isolation was also described of the bacterial antagonist BCAs against *Eutypa lata* [Schmidt et al., (2001), J. Phytopathol. 149: 427-435] although its effectiveness in live plants has not been proven.
   The use of garlic extract as a pruning wound treatment against *Eutypa lata* has been reported to give only a 20-30% of disease control [Loschiavo, (2010), Final Report to grape and wine research & development corporation, Project number SAR 06/01, South Australian Research and Development Institute].
II). Grapevine trunk diseases generate serious economic losses due to the decrease in the plant yields, loss of grape quality, death of plants, uprooting and replanting expenses, etc. Although quantifying these losses is very difficult, some analyses indicate that in the state of California (USA) alone the grapevine trunk disease known as Eutypa dieback signified in the year 2001 economic losses estimated at 260 million dollars [Siever, (2001), Wines & Vines (April): 50-56]. More recently and solely in the case of the trunk disease known as esca, the losses for the vine growers was estimated between 213 and 788 dollars per acre (or, stated differently, around 532 to 1,970 dollars per hectare) [Vasquez et al., (2007), Phytopathol. Mediterr. 46: 118].
III). The incidence of the problem is high. In fact, since the prohibition of the use of sodium arsenite in 2003 for its treatment, a slow but continued increase in the number of affected plants has been observed. Therefore, in a study carried out in the vineyards of Castilla y León corresponding to the designations of origin Cigales, Toro, Ribera de Duero, and Tierra de León, it has gone from a degree of damage of 1.8% in the year 2001 to a degree of damage of 10.5% in the year 2007 [Martin and Cobos, (2007), Phytopathol. Mediterr. 46: 18-25]. This effect has a global nature, being detected in other European countries [Michelon et al., (2006), Phytopathol. Mediterr. 46: 105].
IV). The problem not only affects the vine growers around the world, but it is also a serious problem for the grapevine nurseries, since various studies indicate that in a high proportion the plants are infected in the nursery and when they reach the vine grower to be cultivated in the field, they are already infected, developing the pathology at different times depending on various factors such as soil characteristics, climatic conditions, stress situations, grapevine variety, etc. [Giménez-Jaime et al., (2006), J. Phytopathol. 154: 598-602; Aroca and Raposo, (2005), Phytoma 167: 56-59].

### Purpose of the invention

The purpose of the invention is related to the use of chitosan oligosaccharide, garlic extract *(Allium sativum* L.) and vanillin (4-hydroxy-3 methoxybenzaldehyde), used in combination for the treatment of pruning wounds of the grapevine. These compounds/extracts were selected after testing numerous natural compounds/extracts with antifungal properties.

All of them are natural products:
- Chitosan is obtained from the exoskeleton of crustaceans (shrimp, prawns, etc.) and its consumption is permitted in humans as a dietetic supplement.
- Hydroalcoholic garlic extract is obtained from any variety of garlic apt for human consumption.
- Vanillin is the principal component of the vanilla pod and is used as flavouring in the food industry and also as a food preservative.

These compounds/extracts, in combination, are applied on the pruning wound immediately after it is produced by means of application with a brush, dusting or by means of special pruning shears that apply the product simultaneously with making the cut.

**Trial 1:** To determine the inhibiting effect of the chitosan, hydroalcoholic garlic extract and vanillin on the growth of phytopathogenic fungi responsible for the grapevine trunk diseases determined by means of plate assays.

All the trials (unless there is indication to the contrary) were performed against the following pathogens: *Botryosphaeria dothidea, Cylindrocarpon macrodidymum* (*Neonectria macrodidyma), Diplodia seriata*, *Eutypa lata, Phaeomoniella chlamydospora, Phaeoacremonium aleophylum* and *Phomopsis viticola.*

The trials consisted of inoculating these fungi in the centre of the PDA (potato dextrose agar) culture medium plates containing the antifungal compound/extract. The pates were incubated at 25°C for 5-30 days, depending on the species of fungus, and the radial growth of the colony was measured every 24 hours. The radial growth values obtained were compared with the radial growth data of the same fungus growing on PDA medium plates that did not contain the antifungal agent.
* The inhibiting effect of the chitosan in the plate. The results obtained in the plate for the antifungal activity of chitosan oligosaccharide (tested in the range 0.05 - 5 mg/ml prepared by dilution in water) revealed that 4 mg/ml of chitosan oligosaccharide inhibited 100% of the growth of the mycelium of all the fungi analysed. Nevertheless, the MIC (minimum inhibition concentration) varied among some types of fungi, being 0.5 mg/ml for *E*. *lata,* 0.75 mg/ml for *C*. *macrodidyma, P. chlamydospora, P. aleophilum* and *P*. *viticola* and 1 mg/ml for the fungi *D. seriata* and *B. dothidea.* The effect of the chitosan at a concentration of 2 mg/ml was fungistatic for all the tested fungi, except for C. *macrodidymum* and *P*. *aleophylum* which exhibited a fungicide nature.
* Inhibiting effect of the hydroalcoholic garlic extract in the culture plate. In this case it dealt with a hydroalcoholic garlic extract at 30% (p/v) prepared in ethanol at 10%. The hydroalcoholic garlic extract was tested in the concentration range of 2-20%. The hydroalcoholic garlic extract at 6% inhibited 100% of the growth of all the pathogenic fungi with the exception of *C*. *macrodidymum* (inhibition of 95%) and of *E. lata* (inhibition of 82%). The hydroalcoholic garlic extract at 10% showed a fungistatic effect for all the tested fungi.
* Inhibiting effect of vanillin in the culture plate. Vanillin was prepared initially at a concentration of 300 mg/ml in methanol at 50% and was diluted in water to the working concentration. In this case, the antifungal effect of the vanillin was tested in a concentration range of 0.5-10 mg/ml. The vanillin at a concentration of 4 mg/ml inhibited 100% of the growth in the plate of the fungi *B*. *dothidea, C. macrodidymum, D. seriata* and *P*. *viticola.* The growth of *E*. *lata, P. chlamydospora* and *P*. *aleophylum* was inhibited at 100% at a concentration of 8 mg/ml. The vanillin at a concentration of 10 mg/ml showed a fungistatic effect against all the fungi tested, except against *B. dothidea, C. macrodidymum* and *P*. *chlamydospora* which showed a fungicide effect.
*Inhibiting effect of the chitosan-hydroalcoholic garlic extract-vanillin mixture (CGV mixture) in the culture plate. The mixture was prepared containing chitosan (2 mg/ml), hydroalcoholic garlic extract (4%) and vanillin (2 mg/ml). With this composition, the mixture showed a clear synergistic effect of its components since it inhibited 100% of the growth of all the tested pathogens, while none of its components separately showed this capacity. The synergistic effect and the improved properties of the mixture were also demonstrated because the mixture had a fungicide nature against all the pathogens, causing their death after incubation in its presence for a duration of 1-6 hours.

**Trial 2:** To determine the inhibiting effect of chitosan, hydroalcoholic garlic extract and vanillin on the growth of phytopathogenic fungi responsible for determined grapevine trunk diseases by means of tests carried out on grapevine shoots.

The tests were conducted with grapevine shoots of 7-10 cm in length. The shoots were sterilised in autoclave to eliminate any fungus or bacteria that might interfere in the test. The test consisted of making a small opening in the shoot of around 4 mm in diameter and depth using a scalpel. Next, we added 100 microliters of antifungal agent (or of the mixture) and we let it be absorbed for 1-2 hours. Then a fragment of agar of around 3 mm of diameter, carrier of the phytopathogenic fungus was inserted. The hole was then sealed with plastic paper and the shoot was introduced in a sterile plastic tube in the bottom of which we introduced sterile cotton soaked in water to preserve moist conditions in the interior of the tube that would favour the development of the fungus. The tube was then incubated at 25°C for 7-30 days, depending on the fungus tested. We then proceeded to analyse the shoots, cutting two slices of the trunk 1 cm above and below the inoculation point. From each slice 7 woodchips were extracted which were deposited on PDA medium plates. After incubation at 25°C to permit the growth of the fungus, the results of the inhibition of the growth of the pathogen by the antifungal agent, which was expressed as the ratio (percentage) of woodchips from which the pathogen was developed in the case of the shoots treated with antifungal agent, compared to the number of wood chips that developed the growth of the pathogen in the case of the shoots infected but not treated with the antifungal agent. Each test was conducted in triplicate, using batches of three control shoots and three shoots treated with the antifungal agent.

In this case, the tests were conducted against the following fungi: *Botryosphaeria dothidea, Cylindrocarpon macrodidymum (Neonectria macrodidyma), Diplodia seriata, Eutypa lata, Phaeomoniella chlamydospora,* and *Phomopsis viticola.*
* Inhibiting effect of the chitosan in grapevine shoots. In this test a concentration of chitosan of 10 mg/ml was used. At this concentration the chitosan inhibited 100% of the capacity of all the fungi to propagate through the shoot, except for *C*. *macrodidymum* (inhibition at 90%) and *E. lata* (inhibition of 75%).
* Inhibiting effect of the hydroalcoholic garlic extract in grapevine shoots. In this test a hydroalcoholic garlic extract at 10% was used. At this concentration the inhibition of 100% of the growth of all the fungi was produced, except for *C*. *macrodidymum* (in which the inhibition was 40%).
* Inhibiting effect of the vanillin in grapevine shoots. The concentration of vanillin used in the tests was 4 mg/ml. In these conditions, the antifungal agent inhibited 100% of the growth of *P*. *chlamydospora* and *P*. *viticola,* 78% of the growth of *C*. *macrodidymum,* 67% of the growth of *D.* seriata and *B. dothidea* and 50% of the growth of *E*. *lata.*
* Inhibiting effect of the chitosan-hydroalcoholic garlic extract-vanillin (mixture CGV) in grapevine shoots. The mixture used in this case contained: chitosan (10 mg/ml)-hydroalcoholic garlic extract (10%) - vanillin (4 mg/ml). The mixture of the three components shows a clear synergistic effect compared to the separate use of each of them since the growth of all the fungi was inhibited with an effectiveness of 100%.

**Trial 3:** To determine the protective effect of the chitosan, hydroalcoholic garlic extract and vanillin on grapevine plants artificially infected with phytopathogenic fungi.

The tests were conducted with plants of the Tempranillo grape variety in an experimental vineyard.

The methodology of the test is indicated below:
✔ Each plant was cultivated separately in pots of 800 litres of capacity that contained a commercial substrate especially adapted for grapevines. The plants (500 in total) were organized in 20 rows of 25 plants per row.

In total, in this study 10 rows were sown as described below:
- Row 1. Control row of plants without treatment.
- Row 2. Plants artificially infected on the pruning wounds with the fungi *D*. *seriata* (10,000 colony-forming units), *P*. *chlamydospora* (10,000 colony-forming units) and *C*. *macrodidymum* (2,000 colony-forming units).
- Row 3. Plants treated with chitosan (25 mg/ml)
- Row 4. Plants treated with hydroalcoholic garlic extract (10%)
- Row 5. Plants treated with vanillin (5 mg/ml)
- Row 6. Plants treated with the CGV mixture (each individual compound at the concentration indicated previously).
- Row 7. Plants treated with chitosan (like in row 3) and infected with the pathogens.
- Row 8. Plants treated with hydroalcoholic garlic extract (like in row 4) and infected with the pathogens.
- Row 9. Plants treated with vanillin (like in 5) and infected with the pathogens.
- Row 10. Plants treated with the CGV mixture (like in row 6) and infected with the pathogens.

In all cases, the antifungal agents were applied with a brush on the pruning wounds.

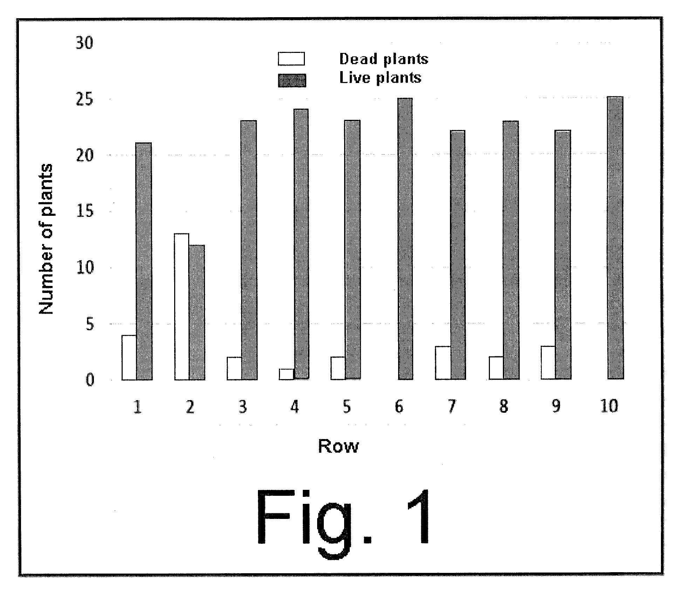

The ratio of the live plants to the dead ones in each of the rows of the experimental vineyard after two years of pruning, application of the antifungal agent and artificial infection with phytopathogenic fungi is shown in Figure 1.

✔ The plants were sown in the spring of the year 2008. In November 2008 the plants were pruned and once pruned the antifungal treatment was applied as corresponded to the rows (rows 3 to 10). Then, 24 hours later, the artificial infection of the plants was performed by means of the addition of aqueous suspensions that contained phytopathogenic fungi and in the previously cited quantities.

This methodology was repeated successively (pruning in November 2009 and application of antifungal agent and fungi; analysis of the plants in June 2010; and finally pruning in November 2010 and application of antifungal agents and fungi).

Having transpired two years from the commencement of the study, two types of parameters were analysed:
a) Mortality index of plants in each row (see Figure 1).
   As we can see in Figure 1, at two years from start the study and proceeding to the artificial infection of the experimental vineyard, we could verify how in the case of row 2 (infected plants not treated with antifungal agents) the mortality level was 52%, with the remaining live plants showing in some cases evident leaf symptoms (lesions) attributable to pathogenic fungi responsible for trunk diseases. This datum indicates that the inoculation carried out on the pruning wounds was effective in provoking the infection of the grapevines.
   The natural morality in the control row (row 1) was 12.0%, while in the case of the rows corresponding to plants not infected and treated with the antifungal agent the mortality levels were respectively 8% (chitosan; row 3), 4% (hydroalcoholic garlic extract; row 4), 8% (vanillin; row 5) and 0% (CGV mixture; row 6).
   On the contrary, in the case of the rows treated with antifungal agents and infected artificially, we observed a mortality rate of 12% (row 7), 8% (row 8), 12% (row 9) and 0% (row 10). These results lead to the conclusion that the individual application of the antifungal agents on the pruning wounds has a clear protective effect on the grapevines since the mortality levels were reduced considerably compared to the mortality rate of 52% observed in row 2 (infected plants not treated with antifungal agents). The best protection was exercised by the hydroalcoholic garlic extract (mortality rate of 8%), followed by chitosan and vanillin (mortality of 12%). The CGV mixture showed improved properties with respect to the individual application of its components since none of the plants treated with the mixture died, and therefore, we can deduce that their joint application has a clear synergistic effect.
b) Analysis of 6 plants per row in order to determine the presence in the plants of fungi responsible for grapevine trunk diseases. For this the plants were uprooted and the presence of fungi was analysed in slices of wood at 2, 5 and 10 cm above and below the inoculation site of the fungi.

The results of this analysis confirmed the presence of phytopathogenic fungi responsible for trunk disease in 50-90% of the samples analysed corresponding to plants infected artificially (row 2). The detection levels of phytopathogenic fungi in the plants of row 1 (the control row) oscillated between 5-8% of the samples analysed and between 0-2% (row 3; chitosan), 0-3% (row 4, hydroalcoholic garlic extract), 1-3% (row 5; vanillin) and 0-1% (row 6; CGV mixture). Similar levels were detected in the case of the rows infected artificially and treated with antifungal agents: 0-4% (row 7), 1-2.5% (row 8), 0-6% (row 9) and 0-1% (row 10). These data clearly confirm that the application of the selected antifungal agents, and especially of the mixture, are capable of lowering the infection levels of phytopathogenic fungi of grapevine trunk diseases through pruning wounds, both in the case of natural infections and in the case of artificial infections in which the pathogens were applied directly to the pruning wounds.

✔ In June 2009 and 2010 an analysis was conducted of a series of parameters including the length of the tenth internode, total length and number of chlorotic leaves. In addition, samples of the leaves were taken from plants of each row from which extracts were obtained in which parameters such as protein concentration, lipid peroxidation, catalase activity, guaiacol peroxidase activity (GPX), glutathione S-transferase (GST) and superoxide dismutase (SOD) using standard protocols. The objective of these studies was, on the one hand, to confirm that the application of the antifungal agents did not have a negative or stressing effect on the plants and, on the other hand, to determine a possible stimulating effect of the systemic defence mechanisms of the plant. The results obtained indicate that in no case did the application of the antifungal agents have a harmful effect on the plant since the levels of the stress markers used did not increase.

### Preparation of the antifungal agents and their application on the pruning wounds

The chitosan oligosaccharide is prepared by means of dilution in distilled water of an initial concentration of 100 mg/ml. It is applied on the pruning wounds at a concentration of 10-25 mg/ml.

The hydroalcoholic garlic extract is prepared by means of homogenisation of peeled garlic cloves at an initial concentration of 30% (p/v) in ethanol at 10%. The homogenisation is achieved by grinding them with a grinder or similar until obtaining a homogenous and fine suspension. The suspension is then incubated for 2 hours at 4°C with stirring for a maximum extraction of the active ingredients. The suspension can be filtered in order to eliminate solid materials. The application on the pruning wounds is done at a concentration of 7-10% (p/v) by means of dilution of the initial suspension in distilled water.

The vanillin is prepared by means of dilution in methanol at an initial concentration of 200 mg/ml. The application on the pruning wounds is done at a concentration of 3-5 mg/ml, by means of dilution of the original dilution in ethanol at 10% (v/v) or water.

The combination of chitosan oligosaccharide, hydroalcoholic garlic extract and vanillin is prepared from the dilutions or concentrated suspensions of the products separately and is applied on the pruning wounds with a composition of chitosan (20-25 mg/ml)-hydroalcoholic garlic extract (8-10%)-vanillin (3-4 mg/ml).

## Claims

1. Use of a combination of natural antifungal agents to prevent the infection of pruning wounds, grafts and lesions in grapevines by phytopathogenic fungi causing trunk diseases, **characterised by** consisting of chitosan oligosaccharide, hydroalcoholic garlic extract and vanillin.

2. A mix of natural antifungal agents to prevent the infection of pruning wounds, grafts and lesions in grapevines by phytopathogenic fungi causing trunk diseases, **characterised by** consisting of chitosan oligosaccharide, hydroalcoholic garlic extract and vanillin.

3. Method to obtain a mix of natural antifungal agents to prevent the infection of pruning wounds, grafts and lesions in grapevines by phytopathogenic fungi causing trunk diseases, **characterised by**:
a) preparing the chitosan oligosaccharide by means of dilution in distilled water at an initial concentration of 100 mg/ml;
b) preparing the hydroalcoholic garlic extract by homogenisation of peeled garlic cloves at an initial concentration of 30% (p/v) in ethanol at 10%;
c) preparing vanillin by means of dilution in methanol at an initial concentration of 200 mg/ml;
d) preparing a mix by the combination of chitosan oligosaccharide, at a concentration of between 10 and 25 mg/ml and hydroalcoholic garlic extract at a concentration of between 7% and 10% (p/v) through the dilution of the initial suspension in distilled water and vanillin at a concentration of between 3 and 5 mg/ml (through dilution of the initial dilution in methanol at 10% (v/v) or water).

4. Use of a mix or combination of natural antifungal agents to prevent the infection of pruning wounds, grafts and lesions in grapevines by phytopathogenic fungi causing trunk diseases, according to claim 1, in a proportion of chitosan oligosaccharide (25 mg/ml), hydroalcoholic garlic extract (10%) and vanillin (4 mg/ml).

## Patentansprüche

1. Verwendung natürlicher antifungaler Mittel zur Verhinderung der Infektion von Schnittwunden, Implantaten und Läsionen in Holzpflanzen durch Phytopathogene Pilze, die für Holzkrankheiten verantwortlich sind, bestehend aus oligosaccharidem Chitosan, hydroalkoholischem Knoblauch- und Vanilleextrakt.

2. Verwendung natürlicher antifungaler Mittel zur Verhinderung der Infektion von Schnittwunden, Implantaten und Läsionen in Holzpflanzen durch Phytopathogene Pilze, die für Holzkrankheiten verantwortlich sind, bestehend aus oligosaccharidem Chitosan, hydroalkoholischem Knoblauch- und Vanilleextrakt.

3. Methode zu Erhalt der Verbindung eines antifungalen Mittels zur Verhinderung der Infektion von Schnittwunden, Implantaten und Läsionen in Holzpflanzen durch Phytopathogene Pilze, die für Holzkrankheiten verantwortlich sind, charakterisiert durch:
a) oligosaccharides Chitosan wird präpariert durch Auflösung in destilliertem Wasser mit einer anfänglichen Konzentration von 100 mg/ml;
b) hydroalkoholische Knoblauchextrakt wird präpariert durch Homogenisierung der geschälten Knoblauchzehen bei einer anfänglichen Konzentration von 30% (p/v) in 10%igem Ethanol;
c) die Vanille wird präpariert durch Auflösung in Methanol bei einer anfänglichen Konzentration von 200 mg/ml;
d) die Verbindung wird präpariert durch die Kombination des oligosacchariden Chitosan mit einer Konzentration zwischen 10 und 25 mg/ml und dem hydroalkoholischen Knoblauchextrakt mit einer Konzentration zwischen 7% und 10% (p/v) durch Auflösung der anfänglichen Suspension in destilliertem Wasser und Vanille in einer Konzentration zwischen 3 und 5 mg/ml (durch Auflösung der anfänglichen Lösung in 10%igem Ethanol (v/v) oder Wasser).

4. Verwendung natürlicher antifungaler Mittel zur Verhinderung der Infektion von Schnittwunden, Implantaten und Läsionen in Holzpflanzen durch Phytopathogene Pilze, die für Holzkrankheiten verantwortlich sind, gemäß Erfordernis 1, bevorzugt mit dem Verhältnis oligosaccharides Chitosan (25 mg/ml), hydroalkoholischer Knoblauchextrakt (10%) und Vanille (4 mg/ml).

## Revendications

1. Utilisation d'une combinaison d'antifongiques naturels pour prévenir l'infection de lésions, greffes et plaies de tailles causée à la vigne par des champignons phytopathogènes responsables de maladies du bois, **caractérisée par le fait qu'**elle contient du chitosan oligosaccharide, de l'extrait hydro-alcoolique d'ail et de la vanille.

2. Una combinaison d'antifongiques naturels pour prévenir l'infection de lésions, greffes et plaies de taille causée à la vigne par des champignons phytopathogènes responsables de maladies du bois, **caractérisée par le fait qu'**elle contient du chitosan oligosaccharide, de l'extrait hydro-alcoolique d'ail et de la vanille.

3. Méthode d'obtention d'un composé d'antifongiques naturels pour prévenir l'infection de lésions, greffes et plaies de taille causée à la vigne par des champignons phytopathogènes responsables des maladies du bois, parce que :
a) le chitosan oligosaccharide est préparé avec une solution d'eau distillée dans une concentration initiale 100 mg/ml ;
b) l'extrait hydro-alcoolique d'ail est préparé avec l'homogénéisation de dents d'ail pelés dans une concentration initiale de 30% (p/v) dans de l'éthanol à 10% ;
c) la vanille est préparée avec une solution de méthanol dans une concentration initiale de 200 mg/ml ;
d) le composé est préparé avec une combinaison de chitosan oligosaccharide, dans une concentration de 10-25 mg/ml et d'extrait hydro-alcoolique d'ail dans une concentration de 7-10% (p/v) à travers la dissolution de la suspension initiale dans de l'eau distillée et de la vanille dans une concentration de 3-5 mg/ml (par dissolution de la dissolution initiale dans de l'éthanol à 10% (v/v) ou de l'eau).

4. Utilisation d'un composé ou d'une combinaison d'antifongiques naturels pour prévenir l'infection de lésions, greffes et plaies de taille causée à la vigne par des champignons phytopathogènes responsables de maladies du bois, suivant la revendication 1, de préférence dans une proportion de chitosan oligosaccharide (25 mg/ml), de l'extrait hydro-alcoolique d'ail (10%) et de vanille (4 mg/ml).
